# EUROPÄISCHE PATENTSCHRIFT

(11) **EP 1 566 328 B1**
(45) Veröffentlichungstag und Bekanntmachung des Hinweises auf die Patenterteilung: **17.09.2008**
(21) Anmeldenummer: 05000972.9
(22) Anmeldetag: 19.01.2005
(51) Int. Cl.: B62J 9/00

(54) **Breitenverstellbarer Seitenkoffer für Motorräder**
Adjustable size side case for motorcycle
Valise latéral à largeur réglable pour motocyclette

(30) Priorität: 20.02.2004 DE 102004008482
(43) Veröffentlichungstag der Anmeldung: 24.08.2005
(73) Patentinhaber: Bayerische Motoren Werke Aktiengesellschaft, 80788 München (DE)
(72) Erfinder: Schäffler, Paul, 08329 Teia (ES)

(56) Entgegenhaltungen:
- EP-A- 1 097 654
- EP-A2- 1 302 394
- DE-A1- 3 135 168
- DE-C- 456 183
- US-A- 4 630 717
- US-A- 4 854 430

## Beschreibung

Die vorliegende Erfindung betrifft einen breitenverstellbaren Koffer gemäß dem Oberbegriff des Patentanspruches 1.

Ein derartiger Koffer ist aus der US 4 630 717 bekannt. Zum technischen Hintergrund gehören ferner die US 4 854 430, DE 31 35 168 A1, DE 456 183, EP 1 097 654 A2 sowie die EP 1 302 394 A2.

Aus der DE 101 50 055 A1 ist ein Seitenkoffer für Motorräder bekannt, der ein inneres Kofferteil aufweist, das im Hinterradbereich eines Motorrads am Motorrad befestigbar ist und ein mit dem inneren Kofferteil verbundenes äußeres Kofferteil. Das äußere Kofferteil ist seitlich verschieblich in Bezug auf das innere Kofferteil angeordnet. Durch Verschieben des äußeren Kofferteils in Bezug auf das innere Kofferteil kann die Breite und somit das Stauraumvolumen des Seitenkoffers verstellt werden.

Aufgabe der Erfindung ist es, einen Koffer zu schaffen, dessen Breite in einfacher Weise mit einer Hand verstellt werden kann.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Seitenkoffer aus, der zur seitlichen Befestigung im Hinterradbereich eines Motorrads vorgesehen ist. Der Seitenkoffer weist ein inneres Kofferteil aufweist, das an dem Motorrad befestigbar ist, und ein mit dem inneren Kofferteil verbundenes äußeres Kofferteil, das seitlich verschieblich in Bezug auf das innere Kofferteil angeordnet bzw. mit den inneren Kofferteil verbunden ist. Durch Verschieben des äußeren Kofferteils in Bezug auf das innere Kofferteil die Breite und somit das Stauraumvolumen des Seitenkoffers verstellt werden.

Der Kern der Erfindung besteht darin, dass die beiden Kofferteile durch einen Verschiebemechanismus miteinander gekoppelt sind, wobei der Verschiebemechanismus ein Bedienelement aufweist, das mit einer einzigen Hand betätigbar ist, wobei durch Betätigen des Bedienelements die beiden Kofferteile relativ zueinander verschiebbar sind. Der Seitenkoffer kann so ausgeführt sein, dass die beiden Kofferteile teilweise ineinander geschoben sind. Beispielsweise kann das innere Kofferteil teilweise das äußere Kofferteil eingeschoben sein oder umgekehrt kann das äußere Kofferteil teilweise in das innere Kofferteil eingeschoben sein.

Nach einer Weiterbildung der Erfindung ist der Verschiebemechanismus durch einen Zahnradmechanismus bzw. durch mehrere Zahnradmechanismen gebildet. Der Verschiebemechanismus kann durch zwei Gruppen von Zahnrädern gebildet sein, nämlich eine hintere Gruppe von Zahnrädern und eine vordere Gruppe von Zahnrädern. Bei einer Anordnung bei der die beiden Kofferteile teilweise "ineinander geschachtelt" angeordnet sind, kann die vordere Gruppe von Zahnrädern zwischen einer vorderen Wand des einen Kofferteils und einer vorderen Wand des anderen Kofferteils sehr platzsparend angeordnet sein. Die hintere Gruppe von Zahnrädern kann zwischen einer hinteren Wand des einen Kofferteils und einer hinteren Wand des anderen Kofferteils ebenfalls sehr platzsparend angeordnet sein.

Das Bedienelement kann mit einem ersten Zahnrad der vorderen Gruppe von Zahnrädern und mit einem ersten Zahnrad der hinteren Gruppe von Zahnrädern verbunden sein. Durch Verschwenken des Bedienelements werden die Zahnräder bzw. die beiden Gruppen von Zahnrädern synchron betätigt, was ein Verschieben der beiden Kofferteile relativ zueinander ermöglicht und zwar ohne dass die teilweise ineinander geschachtelten Kofferteile verklemmen.

Vorzugsweise weisen die beiden Zahnradmechanismen, d. h. die beiden Gruppen von Zahnrädern jeweils zwei Kopplungszahnräder auf. Die "Kopplungszahnräder" sind dazu vorgesehen, eine Drehbewegung in eine Verschiebebewegung bzw. in eine Verschiebekraft, welche die beiden Kofferteile relativ zueinander verschiebt, umzusetzen.

Die beiden Gruppen von Zahnrädern können an dem einen oder anderen Kofferteil drehbar angeordnet sein. Die Kopplungszahnräder der beiden Gruppen von Zahnrädern können jeweils über einen Schwenkhebel gelenkig mit dem anderen Kofferteil verbunden sein. Die Schwenkhebel setzen also eine Drehbewegung der Kopplungszahnräder in eine Verschiebebewegung bzw. in eine Verschiebekraft um. Je nach Drehrichtung der Kopplungszahnräder werden die beiden Kofferteile durch die Verschiebekräfte zusammengezogen oder auseinander gedrückt.

Nach einer Weiterbildung der Erfindung sind die ersten Zahnräder der beiden Gruppen von Zahnrädern auf etwa der halben Höhe der vorderen und der hinteren Wand der Kofferteile angeordnet. Anders ausgedrückt sind die beiden ersten Zahnräder der beiden Gruppen von Zahnrädern etwa auf halber "Kofferhöhe" angeordnet. Bei jeder der beiden Gruppen von Zahnrädern kann folgender Übersetzungsmechanismus vorgesehen sein: Das erste Zahnrad greift unmittelbar in ein erstes Kopplungszahnrad der jeweiligen Gruppe von Zahnrädern ein. Ferner greift das erste Zahnrad in ein Zwischenrad ein. Das Zwischenrad wiederum greift in ein zweites Kopplungszahnrad der Gruppe von Zahnrädern ein. Bei jeder Gruppe von Zahnrädern können die einzelnen Zahnräder also in folgender Reihenfolge übereinander angeordnet sein:
- erstes Zahnrad, welches in ein darüber angeordnetes Zwischenrad eingreift
- das Zwischenrad greift in ein darüber angeordnetes Kopplungszahnrad ein
- das erste Zahnrad greift ferner in das darunter angeordnete zweite Kopplungszahnrad ein.

Wie bereits erwähnt können die beiden Gruppen von Zahnrädern sehr platzsparend zwischen den beiden ineinander geschachtelten bzw. sich teilweise überlappenden Kofferteilen angeordnet sein, wobei die Zahnräder an einem der beiden Kofferteile drehbar gelagert angeordnet sind. Das Betätigungselement kann sehr platzsparend im Innern des Seitenkoffers angeordnet sein. Bei geöffnetem Seitenkoffer ist das Betätigungselement zugänglich und ermöglicht somit eine Breitenverstellung des Koffers.

Vorzugsweise ist das Betätigungselement als U-förmiger Bügel ausgebildet. Der U-förmige Bügel weist ein Bügelmitteilteil und zwei Bügelseitenteile auf. Die Enden der beiden Bügelseitenteile sind mit den beiden ersten Zahnrädern der beiden Gruppen von Zahnrädern verbunden. Durch nach oben bzw. nach unten Verschwenken des U-förmigen Bügels können die beiden ersten Zahnräder und somit die beiden Gruppen von Zahnrädern betätigt und die Drehbewegungen über die Schwenkhebel in eine Verschiebebewegung der beiden Kofferteile relativ zueinander umgesetzt werden. Der U-förmige Bügel weist zwei Endstellungen auf, nämlich eine obere Endstellung, in der das Bügelmitteilteil zu einer oberen Wand des Seitenkoffers hin verschwenkt ist und eine untere Endstellung, in der das Bügelmittelteil zu einer unteren Wand des Seitenkoffers hin verschwenkt ist. In der einen Endstellung des Bügels ist der Seitenkoffer auf seine maximale Breite ausgefahren. In der anderen Endstellung ist er auf seine minimale Breite eingefahren.

Im folgenden wir die Erfindung im Zusammenhang mit der Zeichnung näher erläutert.

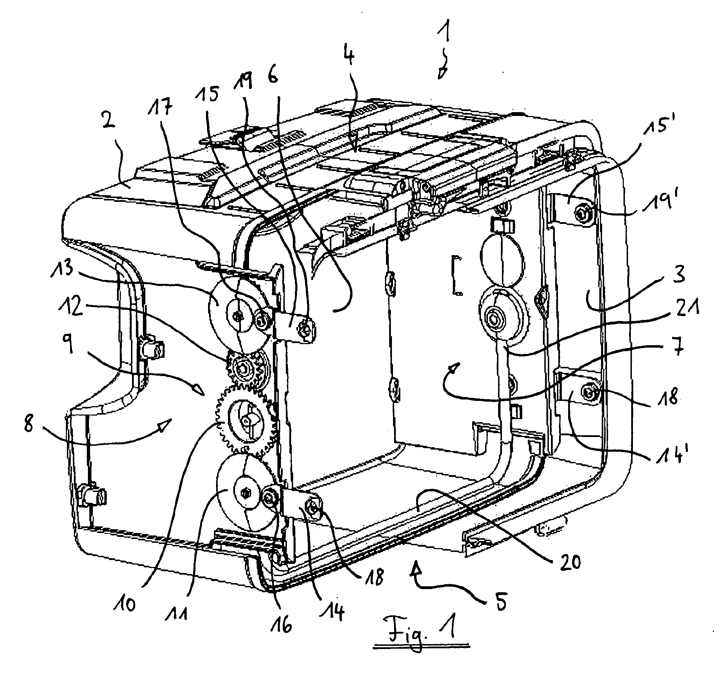

Figur 1 zeigt ein Ausführungsbeispiel eines Seitenkoffers 1 gemäß der Erfindung. Der Seitenkoffer 1 weist ein inneres Kofferteil 2 und ein äußeres Kofferteil 3 auf. Das Kofferteil 2 kann im Hinterradbereich an einem Motorrad befestigt werden. Wie aus Figur 1 ersichtlich ist, sind die beiden Kofferteile 2, 3 "ineinander geschachtelt". Das Kofferteil 3 ist teilweise in das Kofferteil 2 eingeschoben. Der Seitenkoffer 1 weist eine obere Wand 4, eine untere Wand 5, eine Innenwand 5, eine Außenwand, die in der hier gezeigten Schnittdarstellung herausgeschnitten ist, eine vordere Wand 7 und eine hintere Wand 8 auf.

An einer Außenseite der hinteren Wand 8 des Kofferteils 2 ist eine erste Gruppe 9 von Zahnrädern drehbar angeordnet. Eine solche Gruppe von Zahnrädern ist auch an der Außenseite der vorderen Wand 7 des Kofferteils 2 angeordnet. Die beiden Gruppen von Zahnrädern sind also sehr platzsparend in dem sich überlappenden Bereich der beiden Kofferteile 2, 3 angeordnet. Jede der beiden Gruppen von Zahnrädern weist ein erstes Zahnrad 10 auf. Die beiden ersten Zahnräder 10 sind etwa auf "halber Höhe" der Vorder- bzw. Rückwand des Seitenkoffers 1 angeordnet. Das erste Zahnrad 10 kämmt mit einem ersten Kopplungsrad 11 und mit einem Zwischenrad 12. Das Zwischenrad 12 wiederum kämmt mit einem zweiten Kopplungsrad 13. Mit den Kopplungsrädern 11, 13 ist jeweils ein Schwenkhebel 14, 15 über ein Schwenkgelenk 16, 17 gelenkig verbunden. Die Schwenkhebel 14, 15 sind jeweils über ein weiteres Schwenkgelenk 18, 19 gelenkig mit dem Kofferteil 3 verbunden.

Bei der in Figur 1 gezeigten Darstellung ist lediglich die Verbindung der beiden Kofferteile 2, 3 über Schwenkhebel 14', 15' und zugeordnete Schwenkgelenke 18', 19' im Bereich der Vorderwand 7 zu erkennen, da das Kofferteil 3 im Bereich der hinteren Wand 8 in der gezeigten Schnittdarstellung ausgeschnitten ist.

Im Inneren des Seitenkoffers 1 ist ein U-förmiger Bügel 20 vorgesehen, der ein Bügelmittelteil und zwei Bügelseitenteile aufweist, von denen in der hier gezeigten Darstellung nur ein Bügelseitenteil zu erkennen ist. Der U-förmige Bügel ist mit den Enden 21 seiner Bügelseitenteile mit den ersten Zahnrädern 10 der beiden Zahnradgruppen verbunden. Der U-förmige Bügel kann zwei Stellungen einnehmen, nämlich die in Figur 1 gezeigte nach unten geklappte Stellung und eine um 180° nach oben geklappte Stellung.

In der in Figur 1 gezeigten Bügelstellung ist der Seitenkoffer 1 auf seine maximale Breite ausgefahren. Durch nach oben Verschwenken des U-förmigen Bügels 20 werden die beiden ersten Zahnräder 10 gedreht. Die Drehbewegung wird von den ersten Zahnrädern 10 unmittelbar auf die ersten Kopplungsräder 11 bzw. über die Zwischenräder 12 auf die zweiten Kopplungsräder 13 übertragen. Bei einer Betätigung des U-förmigen Bügels 20 werden die beiden Kopplungsräder 11, 12 einer jeden Zahnradgruppe in entgegengesetzte Richtungen gedreht. Durch nach oben klappendes U-förmigen Bügels 20 wird über die Schwenkhebel 14, 15 bzw. 14', 15' eine Zugkraft auf das Kofferteil 3 ausgeübt, was die beiden Kofferteile 2, 3 zusammenfahren lässt.

Wie aus Figur 1 ersichtlich ist, ist die Bedienung bzw. Breitenverstellung des Seitenkoffers 1 äußerst leicht durchzuführen. Der U-förmige Bügel kann mit einer Hand gegriffen und verschwenkt werden. Durch die beiden Gruppen von Zahnrädern ist sichergestellt, dass die beiden Kofferteile 2, 3 parallel zusammengefahren bzw. auseinandergefahren werden. Ein Verklemmen der beiden Kofferteile wird dadurch zuverlässig vermieden.

## Patentansprüche

1. Koffer (1), der ein erstes Kofferteil (2) aufweist und ein mit dem ersten Kofferteil (2) verbundenes zweites Kofferteil (3), das seitlich verschieblich in Bezug auf das erste Kofferteil (2) angeordnet ist, wobei durch Verschieben des zweiten Kofferteils (3) in Bezug auf das erste Kofferteil (2) die Breite und somit das Stauvolumen des Seitenkoffers (1) verstellt werden kann, wobei
die beiden Kofferteile (2, 3) durch einen Verschiebemechanismus (9) miteinander gekoppelt sind und ein Bedienelement (20) vorgesehen ist, das mit einer einzigen Hand betätigbar ist, wobei durch Betätigen des Bedienelements (20) die beiden Kofferteile (2, 3) relativ zueinander verschiebbar sind,
**dadurch gekennzeichnet, dass**
der Koffer (1) ein Seitenkoffer zur seitlichen Befestigung im Hinterradbereich eines Motorrads ist,
das erste Kofferteil (2) ein inneres Kofferteil (2) ist, das an dem Motorrad befestigbar ist,
das zweite Kofferteil ein äußeres Kofferteil (3) ist, und dass
der Verschiebemechanismus (9) mindestens einen Zahnradmechanismus aufweist, der in einem sich überlappenden Bereich der beiden Kofferteile (2, 3) angeordnet ist.

2. Seitenkoffer (1), nach Anspruch 1, wobei der Verschiebemechanismus (9) eine vordere und eine hintere Gruppe von Zahnrädern aufweist, wobei die vordere Gruppe von Zahnrädern zwischen einer vorderen Wand des einen Kofferteils (2) und einer vorderen Wand des anderen Kofferteils (3) und die hintere Gruppe von Zahnrädern zwischen einer hinteren Wand des einen Kofferteils (2) und einer hinteren Wand des anderen Kofferteils (3) angeordnet ist.

3. Seitenkoffer (1), nach Anspruch 2, wobei das Betätigungselement (20) mit einem ersten Zahnrad (9) der vorderen Gruppe von Zahnrädern und mit einem ersten Zahnrad der hinteren Gruppe von Zahnrädern gekoppelt ist, so dass bei einer Betätigung des Betätigungselements die beiden ersten Zahnräder (9) synchron betätigt werden.

4. Seitenkoffer (1), nach einem der Ansprüche 2 oder 3, wobei bei jeder der beiden Gruppen von Zahnrädern das erste Zahnrad (9) jeweils ein erstes und ein zweites Kopplungszahnrad (11, 13) antreibt, wobei die Kopplungszahnräder (11, 13) der ersten und der zweiten Gruppe von Zahnrädern jeweils zur Übertragung einer Verschiebekraft zwischen den beiden Kofferteilen (2, 3) vorgesehen sind.

5. Seitenkoffer (1), nach einem der Ansprüche 2 bis 4, wobei die erste und die zweite Gruppe von Zahnrädern an einem der beiden Kofferteile drehbar angeordnet sind und jedes der Kopplungszahnräder (11, 13) über einen zugeordneten Schwenkhebel (14, 15; 14', 15') gelenkig mit dem anderen Kofferteil (2, 3) verbunden ist, wobei die Schwenkhebel (14, 14; 14', 15') zur Übertragung einer Verschiebekraft zwischen den beiden Kofferteilen vorgesehen sind.

6. Seitenkoffer (1), nach einem der Ansprüche 3 bis 5, wobei die ersten Zahnräder (10) der beiden Gruppen von Zahnrädern jeweils etwa auf halber Höhe der vorderen und der hinteren Wand (7, 8) der Kofferteile (2, 3) angeordnet sind.

7. Seitenkoffer (1), nach einem der Ansprüche 3 - 6 wobei bei jeder der beiden Gruppen (9) von Zahnrädern jeweils das erste Zahnrad (10) unmittelbar in das erste Kopplungsrad (11) eingreift und das erste Zahnrad (10) ferner in ein Zwischenrad (12) eingreift, welches in das zweite Kopplungszahnrad (13) eingreift, so dass bei einer Betätigung der Betätigungseinrichtung (20) die beiden Kopplungszahnräder (11, 13) einer jeden Gruppe von Zahnrädern in unterschiedliche Richtungen gedreht werden.

8. Seitenkoffer (1), nach einem der Ansprüche 1 bis 7, wobei das Betätigungselement (8) im Innern des Seitenkoffers (1) angeordnet ist und bei geöffnetem Seitenkoffer zugänglich ist.

9. Seitenkoffer (1), nach einem der Ansprüche 3 - 8 wobei das Betätigungselement (20) ein U-förmiger Bügel ist, der ein Bügelmitteilteil und zwei Bügelseitenteile aufweist, wobei Enden der Bügelseitenteile mit den beiden ersten Zahnrädern (10) verbunden sind.

10. Seitenkoffer (1), nach Anspruch 9, wobei der Bügel (20) zwei Endstellungen aufweist, nämlich eine obere Endstellung, in welcher das Bügelmitteilteil zu einer oberen Wand (4) des Seitenkoffers (1) hin verschwenkt ist und eine untere Endstellung, in der das Bügelmittelteil zu einer unteren Wand (5) des Seitenkoffers (1) hin verschwenkt ist, wobei der Seitenkoffer (1) in der einen Endstellung auf seine maximale Breite ausgefahren und in der anderen Endstellung auf seine minimale Breite eingefahren ist.

## Claims

1. A trunk or box (1) comprising a first part (2) and a second part (3) connected to the first part (2) and movable laterally relative to the first part (2), wherein the width and consequently the stowage space of the side trunk (1) can be adjusted by moving the second part (3) relative to the first part (2), wherein
the two parts (2, 3) are coupled together by a shifting or sliding mechanism (9) and a control element (20) is provided and actuatable by a single hand, wherein the two trunk parts (2, 3) are movable relative to one another by actuating the control element (20),
**characterised in that**
the trunk (1) is a side trunk for fastening at the side in the rear wheel region of a motorcycle,
the first part (2) is an inner part (2) attachable to the motorcycle, the second part is an outer part (3) and
the shifting mechanism (9) comprises at least one gearwheel mechanism disposed in an overlapping region of the two trunk parts (2, 3).

2. A side trunk (1) according to claim 1, wherein the shifting mechanism (9) comprises a front and a rear group of gearwheels, wherein the front group of gearwheels is disposed between a front wall of one part (2) and a front wall of the other part (3) and the rear group of gearwheels is disposed between a rear wall of the one part (2) and a rear wall of the other part (3).

3. A side trunk (1) according to claim 2, wherein the actuating element (20) is coupled to a first gearwheel (9) in the front group of gearwheels and to a first gearwheel in the rear group of gearwheels so that the two first gearwheels (9) can be actuated in synchronism by actuating the actuating element.

4. A side trunk (1) according to claim 2 or claim 3, wherein in both groups of gearwheels the first gearwheel (9) drives a respective first and a second coupling gearwheel (11, 13), wherein the coupling gearwheels (11, 13) in the first and the second group of gearwheels are each adapted to transmit a shifting force between the two trunk parts (2, 3).

5. A side trunk (1) according to any of claims 2 to 4, wherein the first and the second group of gearwheels are rotatably disposed on one of the two trunk parts and each coupling gearwheel (11, 13) is pivotably connected to the other trunk part (2, 3) by an associated rocking lever (14, 15; 14', 15') wherein the rocking levers (14, 15; 14', 15') are adapted to transmit a shifting force between the two trunk parts.

6. A side trunk (1) according to any of claims 3 to 5, wherein the first gearwheels (10) in both groups of gearwheels are disposed approximately halfway up the front and the rear wall (7, 8) of the trunk parts (2, 3).

7. A side trunk (1) according to any of claims 3 - 6, wherein in each of the two groups (9) of gearwheels the first gearwheel (10) directly engages the first coupling wheel (11) and the first gearwheel (10) also engages in an intermediate gearwheel (12) which engages the second coupling gearwheel (13), so that when the actuating device (20) is actuated the two coupling gearwheels (11, 13) in each group of gearwheels are rotated in different directions.

8. A side trunk (1) according to any of claims 1 to 7, wherein the actuating element (20) is disposed inside the side trunk (1) and is accessible when the trunk is opened.

9. A side trunk (1) according to any of claims 3 to 8, wherein the actuating element (20) is a U-shaped component having a middle part and two side parts, wherein ends of the side parts are connected to the two first gearwheels (10).

10. A side trunk (1) according to claim 9, wherein the curved member (20) has two end positions, i.e. a top end position in which the middle part is pivoted towards a top wall (4) of the side trunk (1) and a bottom end position in which the middle part is pivoted towards a bottom wall (5) of the side trunk (1), wherein the side trunk (1) is extended to its maximum width in one end position and retracted to its minimum width in the other end position.

## Revendications

1. Malle (1) comportant une première partie de malle (2) et une seconde partie de malle (3) reliée à la première partie de malle (2), et cette seconde partie peut coulisser latéralement par rapport à la première partie de malle (2),
et la largeur et ainsi la capacité de la malle latérale (1) se règle par coulissement de la seconde partie de malle (3) par rapport à la première partie de malle (2),
les deux parties de malle (2, 3) étant couplées l'une à l'autre par un mécanisme de coulissement (9) et un élément de manoeuvre (20) est prévu pour être actionné par une seule main et par l'actionnement de l'élément de manoeuvre (20) on coulisse les deux parties de malle (2, 3) l'une par rapport à l'autre,
**caractérisée en ce que**
la malle (1) est une malle latérale destinée à être fixée latéralement au niveau de la roue arrière d'une motocyclette,
la première partie de malle (2) est une partie intérieure de malle (2) qui se fixe au niveau de la roue de la motocyclette,
la seconde partie de malle est une partie de malle extérieure (3) et
le mécanisme de coulissement (9) comporte au moins un mécanisme à roue dentée prévu dans la zone de chevauchement des deux parties de malle (2, 3).

2. Malle latérale (1) selon la revendication 1, selon laquelle le mécanisme de coulissement (9) comporte un groupe avant et un groupe arrière de pignons dentés,
le groupe avant de pignons dentés étant prévu entre une paroi avant d'une partie de malle (2) et une paroi avant de l'autre partie de malle (3) et le groupe arrière de pignons dentés étant prévu entre la paroi arrière d'une partie de malle (2) et la paroi arrière de l'autre partie de malle (3).

3. Malle latérale (1) selon la revendication 1, dans laquelle l'élément de manoeuvre (20) est relié à un premier pignon denté (9) du groupe avant de pignons dentés et il est couplé à un premier pignon denté du groupe arrière de pignons dentés de façon qu'en actionnant l'élément de manoeuvre on actionne en synchronisme les deux premiers pignons dentés (9).

4. Malle latérale (1) selon l'une des revendications 2 ou 3, selon lequel pour chacun des deux groupes de pignons dentés, le premier pignon denté (9) entraîne respectivement un premier et un second pignon dentés de couplage (11, 13), les pignons dentés de couplage (11, 13) du premier et du second groupe de pignons dentés étant respectivement prévus pour transmettre une force de coulissement entre les deux parties de malle (2, 3).

5. Malle latérale (1) selon l'une des revendications 2 à 4, selon laquelle le premier et le second groupe de pignons dentés sont montés à rotation sur l'une des deux parties de malle et chacun des pignons dentés et de couplage (11, 13) est relié de manière articulée par un levier pivotant associé (14, 15 ; 14', 15') à l'autre partie de malle (2, 3), les leviers pivotants (14, 15 ; 14', 15') transmettant la force de coulissement entre les deux parties de malle.

6. Malle latérale (1) selon l'une des revendications 3 à 5, selon laquelle les premiers pignons dentés (10) des deux groupes de pignons dentés sont prévus respectivement sensiblement à mi-hauteur de la paroi avant et de la paroi arrière (7, 8) des parties de malle (2, 3).

7. Malle latérale (1) selon l'une des revendications 3 à 6, selon laquelle pour chacun des deux groupes de pignons dentés, le premier pignon denté (10) respectif agit directement sur le premier pignon de couplage (11) et le premier pignon denté (10) engrène en outre dans un pignon intermédiaire (12) qui engrène avec le second pignon denté de couplage (13) de façon que la manoeuvre de l'installation d'actionnement (20) fasse tourner les deux pignons dentés de couplage (11, 13) de chaque groupe de pignons dentés dans des sens de rotation différents.

8. Malle latérale (1) selon l'une des revendications 1 à 7, selon laquelle l'élément d'actionnement (8) est prévu à l'intérieur de la malle latérale (1) et est accessible lorsque la malle latérale est ouverte.

9. Malle latérale (1) selon l'une des revendications 1 à 8, selon laquelle l'élément d'actionnement (20) est un arceau en forme de U ayant une partie médiane d'arceau et deux parties latérales, les extrémités des parties latérales d'arceau étant reliées aux deux premiers pignons dentés (10).

10. Malle latérale (1) selon la revendication 9, selon laquelle l'arceau (20) présente deux positions de fin de course, à savoir une position de fin de course supérieure dans laquelle la partie médiane de l'arceau est basculée vers la paroi supérieure (14) de la malle latérale (1) et une position de fin de course inférieure dans laquelle la partie médiane de d'arceau est basculée vers la paroi inférieure (5) de la malle latérale (1), la malle latérale (1) étant déployée à sa largeur maximale pour la première position de fin de course et elle est rétractée à sa largeur minimale pour l'autre position de fin de course.
